# EUROPEAN PATENT APPLICATION

(11) **EP 3 373 614 A1**
(43) Date of publication of application: **12.09.2018**
(21) Application number: 18160959.5
(22) Date of filing: 09.03.2018
(51) Int. Cl.: H04W 4/06, H04L 29/08, H04L 12/24, H04W 8/22, H04W 8/24, H04N 21/258, H04N 21/433, G06F 17/30, H04L 12/18, H04N 21/40, H04N 21/437, H04N 21/45, H04L 29/06, H04W 88/02, H04W 88/08, H04M 15/00

(54) **NETWORK CONTROLLED CACHING BY USER EQUIPMENT**

(30) Priority: 10.03.2017 EP 17160238
(71) Applicant: IPCom GmbH & Co. KG, 82049 Pullach (DE)
(72) Inventor: HANS, Martin, 31162 Bad Salzdetfurth (DE); SCHMIDT, Andreas, 38124 Braunschweig (DE); LUFT, Achim, 38118 Braunschweig (DE)
(74) Representative: Tomlinson, Edward James

(57) **Abstract**

The present invention provides a method for a user equipment, UE, device to cache data, the method comprising providing by the UE device to a mobile communications network to which the UE device is attached content information concerning services which the UE device has identified as being of potential relevance to a subsequent operation of the UE device; and in response to a configuration message received from the network, storing the data received from at least one of the mobile communications network and a non-mobile communications network source in a cache in accordance with the configuration message.

## Description

The present invention relates to the caching by a user equipment, UE, device of received data.

In cellular mobile communication systems, the basic communication path is between one base station and a single UE device. In some systems, shared channels are used, which can generally be received by multiple mobile devices in a cell and which addressing mechanism associates the data currently present on a given resource of the shared channel to a single user.

Most cellular communication systems provide in addition a broadcast mechanism, i.e. data transmitted to all devices without addressing any specific device. The broadcast is used for control information that need to be received by mobile devices prior to accessing the cells, so called system information. In addition, some systems, e.g. UMTS and LTE, provide broadcast channels also for user data transmission, so called Multimedia Broadcast and Multicast Service (MBMS in UMTS and eMBMS in LTE). Both broadcast mechanisms use a physical channel and transport channels that are tailored for broadcast data and dedicated for that purpose. Some broadcast mechanisms require multiple cells providing (e)MBMS to transmit the same data synchronously (in Single Frequency Network (SFN) fashion).

In 3GPP an enhancement for eMBMS has been developed that allows the usage of the DL shared channel (usually only used for DL data to single dedicated devices) to all UEs of a cell, i.e. a broadcast on the shared channel. The feature is called "Single Cell Point to Multipoint" (SCPTM) transmission) which makes broadcast transmissions easy to deploy for operators as they don't require cell synchronization and they allow different content in different cells.

Caching of data is known as a means to store data that has been received once from a data source in order to reproduce the data when it is requested again. Caching is used in network proxies for networks in which multiple users require the same data from a content source in order to lower the data traffic on connections between the proxy and the traffic source. Caching is also used in the world wide web. Web content is cached in the network e.g. proxy servers as well as locally by browser applications.

Data caching via broadcast is also well known in the television landscape, e.g. for the so called teletext. The digital text data imprinted on the TV broadcast signal was received and stored by televisions or recorders to be re-produced once the user opens the respective UI. In this case, caching was used to accelerate data availability compared to the provided bandwidth over the air.

The use of data caching for high speed wireless video networks is proposed by Golrezaaei et al. in "Base-Station Assisted Device-to-Device Communications for High-Throughput Wireless Video Networks", IEEE Transactions on Wireless Communications 13(7) April 2013. As described, video files may be cached by devices and when a UE served by a base station wishes to play the video, the base station provides information to the UE to obtain cached files from the other devices over a device to device connection.

3GPP is currently developing the next generation (5G) core network (NG CN) and radio interface (New Radio). An efficient broadcasting mechanism is one features that is agreed to be developed during the standardization phase. The broadcast will probably utilize either dedicated broadcast channels, e.g. in SFN fashion, or data channels shared with other services.

Discussions about efficient data caching are just starting in 3GPP without any potential solutions being proposed yet. It is expected that mobile network operators will ensure 5G systems include mechanisms for data caching in the devices using efficient delivery, e.g. broadcast or multicast. These mechanisms are controlled at least in parts by the operator and the operator may charge the subscriber for the related data delivery.

US 2013/0150015 A1 describes a method for caching in which a portion of a media file is cached in a UE. A caching server selects the media file for the UE and sends instructions to the UE to cache the portion.

US 8,874,781 B2 proposes a server in a mobile network to assemble highly popular data ("social media entities") and broadcast the data to mobile devices. The data to assemble is defined by the server by observing the social media providers and requests of users.

A schedule broadcast in advance informs the devices about upcoming data broadcast so that the devices can selectively receive relevant data and store it in a cache on the device. The selection is based on user or application behaviour detected by the device, e.g. user's subscription to social media, his friends, people he follows or people his friends follow etc.

The document also describes caching in the network in so called edge servers (near the radio access network, i.e. in the base stations). A further aspect described is that of providing different content in different areas (also caching in different edge servers) because of an expected location-based accumulation of user interests.

Mechanisms of end-device controlled caching like the browser application caching of received data or devices selectively receiving broadcast information based on application usage or other observation on the end-device are known. The operator control in such arrangements is limited to controlling the data broadcast, e.g. selecting the most popular pieces of data by observing the content providers (e.g. social media servers) or generating data statistics over a number of users in a network. See for example US 8,582,508 B2, US 2010/0287052 A1, US 8,671,162 B2, US 8,812,651 B1, US 8,825,754 B2 and US 2011/0040718 A1.

Mechanisms for operator control of data caching in a device, i.e. influencing the selection of to-be-cached information by the device, are not known.

Mechanisms to reliably inform the operator about usage of previously cached information by the device or an application on the device (i.e. some kind of feedback channel in uplink direction) to enable adaption of the information offering, e.g. on the broadcast channels, and charging of the data usage are also not known in the prior art.

The present invention provides a method for a user equipment, UE, device to cache data, the method comprising providing by the UE device to a mobile communications network to which the UE device is attached content information concerning content which the UE device has identified as being of potential relevance to a subsequent operation of the UE device, the content information comprising at least one of content type information, content source information and application information relating to an application on the UE device for processing the content; and in response to a configuration message received from the network, the configuration message comprising information relating to data determined in the mobile communication network based on the content information received from the UE device, storing data received from the mobile communications network in a cache in accordance with the configuration message, wherein the data is received from the mobile communication network in a broadcast delivery, the data reception comprising selecting from data contained in a broadcast transmission from the mobile communication network the data to cache based on the information comprised in the configuration message.

In a further aspect, the invention provides a method of operating a communications network comprising at least one base station in communication with at least one user equipment, UE, device, the method comprising receiving from the UE device content information concerning services which the UE device has identified as being of potential relevance to a subsequent operation of the UE device; determining what data should preferably be cached by the UE device either in response to the content information or information previously collected by the network based on previous data requests of the UE device; providing the UE device with a configuration message for enabling the UE device to store the data in a cache in accordance with the configuration message.

According to one aspect of the invention an end-user device (UE) provides to the network its capability to store data provided by the network in its local storage, e.g. in the non-volatile memory of the UE. The indicated capability to store is intended for data not yet requested by any application on the UE for potential later usage by such application, so called caching. The capability information may comprise the maximum size of the cache. This could be set as an absolute size or as a percentage of the available memory. It is beneficial if the system enables the operator to set a minimum size of the cache as well. In another embodiment the capability information contains the currently available additional size that is used opportunistically and may be reduced any time due to usage for other purposes. The capability information may be provided on request by the network or initiated by the UE, it may be updated in case e.g. the size of the available memory changes.

In one embodiment the memory for caching may be fully allocated/administered by the operator (i.e. the operator may partition it, dynamically adjust its size, fill it with data, overwrite data, or delete data from it).

According to another aspect of the invention, the UE informs the network about potentially interesting services, for example installed applications or usual behaviour with respect to data download. Also, there may be an index defined for various content categories or types and the UE indicates interesting indices.

Alternatively, according to another aspect of the invention, the network determines interesting content categories or types from past data requests of the UE or of the subscriber and stores the information in a subscriber data base. The categories, types or derived indices may be used by the network later to determine data to be provided for caching and/or data to be cached by the UE.

According to another aspect of the invention, the network configures the selection of data the UE receives for caching. The network may send dedicated configuration information to the UE that may contain rules and filters. The UE applies the rules and filters when determining content to be received and stored from the total content broadcast by the network for caching. The rules may contain indices, e.g. a subset of those indices indicated to be of interest by the UE. The configuration information may also contain priority information, e.g. a minimum priority for different indices. The rules may also be time dependant, e.g. rules may apply on a specific time interval relating to the time of day or a specific weekday.

The network may then broadcast selected data received from content providers. The broadcast may comprise content information and scheduling information to allow UEs to selectively decide when to receive relevant data. The network may broadcast more information than a single UE is expected to cache so that selecting of content to be received is a necessary step for every UE.

According to the invention, a UE applies the configuration received from the network based on the received content and scheduling information to decide on which data to receive when. The decision may additionally be influenced by UE internal information not received from the network, e.g. user preferences and application usage information. After reception of content data, the data is stored in the cache.

The usage of content and scheduling provides the UE with the means to determine the time instances when to receive relevant and to-be-cached broadcast information and thus allows power saving in other times.

According to another aspect of the invention the data broadcast by the operator comprises a data identity, e.g. a universal resource identifier (URI), that identifies a piece of data and its source uniquely and that is stored by the UE in relation to the data. The UE will reproduce data requested by an application from a content provider that is cached locally in the memory of the device using the data identity. As an example, an application may use a protocol, e.g. HTTP, to request a piece of media from a server identified with a URL. The piece of media may already be cached and associated with the URL so that the application may receive a HTTP response directly from the cache containing the media stored in the cache and identified by the URL.

There may be multiple unique IDs associated with a single piece of media data broadcast, e.g. if an image or a video is identically provided to customers from different content providers with different URIs. As an example, the piece of media described above may be offered identically by multiple service providers in the internet, i.e. the same piece of media is available on different servers with different URIs but identical content (a picture or a video, for example). The single piece of media broadcast by the operator and cached in the UE may thus be associated with multiple URIs so that HTTP requests for the piece of media using any of the associated URIs may be responded to directly from the cache containing the single piece of media.

According to another aspect of the invention the data broadcast by the operator, especially the content and/or scheduling information, comprises index information that is used in the configuration of the UE by the network to identify categories or types of data the UE should or is allowed to cache. The UE uses the index information when taking the received content and scheduling information into account to apply the configuration received from the network.

Category or type information in the form of an index that points to a pre-known catalogue helps in the differentiation of content of interest for a user or UE vs. content that is not interesting.

According to another aspect of the invention the data broadcast by the operator, especially the content and/or scheduling information, comprises media information that is used by the UE to select media data for caching that is appropriate for the UE. The media information may include media encoding and resolution of media which enables the UE to select the most appropriate resolution and encoder for presentation on the UE.

Media information helps to ensure the most appropriate data is cached and the quality of experience of the user is increased.

According to another aspect of the invention the data broadcast by the operator, especially the content data and/or scheduling information, comprises priority information. The UE stores the priority information with data cached locally. The UE uses the priority information to select data to receive and cache based on the data already cached. In case the memory of the cache is not sufficient to store all relevant data the UE replaces stored data of lower priority with received data of higher priority having the same index. On the other hand, the UE omits reception of lower or equal priority data of the same index.

Usage of priority allows operators to ensure UEs cache most asked-for information first and by that maximize the benefit of the cached information to the average user.

According to another aspect of the invention the data broadcast by the operator, especially the content information, comprises timer information. The UE uses the timer information in relation to the received data in that it reduces the priority of cached data based on rules that take the timer information into account. The rule may be part of the configuration of the UE by the network.

Usage of timer information allows broadcasting of data with high priority that is currently consumed by a high number of customers even if the data is known to be of interest only for a short time. Reducing the priority based on a timer ensures new high-priority data will replace old high-priority data after a while. Reducing the priority based on a timer may comprise setting, after expiry of the timer, the priority to a level that results in the data to be treated irrelevant and to-be-deleted.

According to another aspect of the invention the data broadcast by the operator, especially the content information, comprises version information. The UE stores the version information with the received data and it replaces the data with newer versions that are received based on the content information. On the other hand, the UE omits reception of data it already has cached with the same or lower version numbers.

Usage of version information or version numbers guarantees newest data is available in the cache while redundant caching is prevented.

According to another aspect of the invention, the UE informs the network about the actual consumption of cached data. For that purpose, the UE may compile information about the concrete data identified by the identity received from the network or the index or indices of the data together with the size of consumed data. The information may be transmitted on a regular or on-demand basis to the network. The information may also be stored and transmitted only when a certain event occurs, e.g. when the UE changes from idle to connected mode or when a certain amount of data has been consumed from the cache.

The information about actually consumed data from the cache allows network operators to charge for broadcast data delivery which they cannot do otherwise. A second benefit is that the operator can adapt its algorithms that select content to be broadcast to be optimized for actual user interests.

The cached data may need to be deleted from the cache at some point in time, e.g. when the total cache size needs to be reduced because of opportunistic usage of UE's memory for cache in case that other applications demanding more memory on cost of the cache. In that case according to this invention the UE deletes data from the cache taking the priority into account. If the priority is not reduced in time with the mechanisms described above, for the deletion the UE may also take the age (retention time) of the data in the cache into account. One strategy is to delete all data with lowest priority first, then the next lowest priority level and so forth until enough memory has been freed. The UE could also run a periodic or event bases algorithm that marks data for potential deletion, i.e. when it is known the data will not be used by the UE. When the need to free memory arises, all data marked for deletion is deleted first before not marked data is deleted according to its priority.

The data for caching broadcast by the network and cached by the UE may comprise any content including commonly requested and/or popular data such as ring tones, pictures, games, web pages, multimedia content, advertisements, firmware updates, software, software updates, and/or the like. It is particularly beneficial to cache only those pieces of data that are (almost) static. Details regarding the decision making process as to what data is supposed to be cached in the UE and (if applicable) any prioritization aspects or timer settings is subject of a separate invention.

The present invention is not limited to broadcasting information. The idea of caching in this invention is the usage of the most efficient way to deliver data predicted to be used by a UE. If a UE has a very efficient dedicated connection to the network, i.e. via a WiFi radio connection whose radio resources are basically for free, this connection can be used by the network to send dedicated content to be cached by the UE based on the information about potentially interesting services provided by the UE or the information about interesting content determined by the network.

The following additional aspects of the invention relate to functions deployed within the UE.

One such aspect is the provision of a cache table of content to applications so that applications can indicate content, e.g. data or media data, that is already cached, to the user. The indication can inform the user about availability with zero transmission delay or about a special price for consumption, e.g. when the operator offers cached data under special conditions.

As an example, an (animated) icon may be presented to the user on the end-user device's display whenever data is read/retrieved/processed from or written to the memory, similar to the arrow symbols used nowadays that appear whenever data is transmitted over the end-user device's various air interfaces (e.g., UMTS, LTE, WLAN, Bluetooth, and so on).

Applications on a UE can also subscribe to events related to cached content based on the index provided by the network described above, so that the device or the device's OS informs the applications about newly received or updated content.

The memory ("cache") used for caching data that is expected to be used at a later point in time (by the user or an application) according to this invention may reside either in the end-user device (e.g., inextricably mounted to the terminal's circuitry board) or in an attachable/removable circuitry card that can be inserted/connected to the end-user device, such as the UICC or a USB stick. The memory may be non-volatile memory or volatile memory.

Preferred embodiments of the invention will now be described, by way of example only, with reference to the accompanying drawings in which:
- Fig. 1: shows a schematic diagram of a UE device;
- Fig. 2: is a message flow chart for data caching;
- Fig. 3: is a continuation of the message flow chart of Fig. 2;
- Fig. 4: illustrates a structure of transmitted data; and
- Fig. 5: illustrates exemplary data structures.

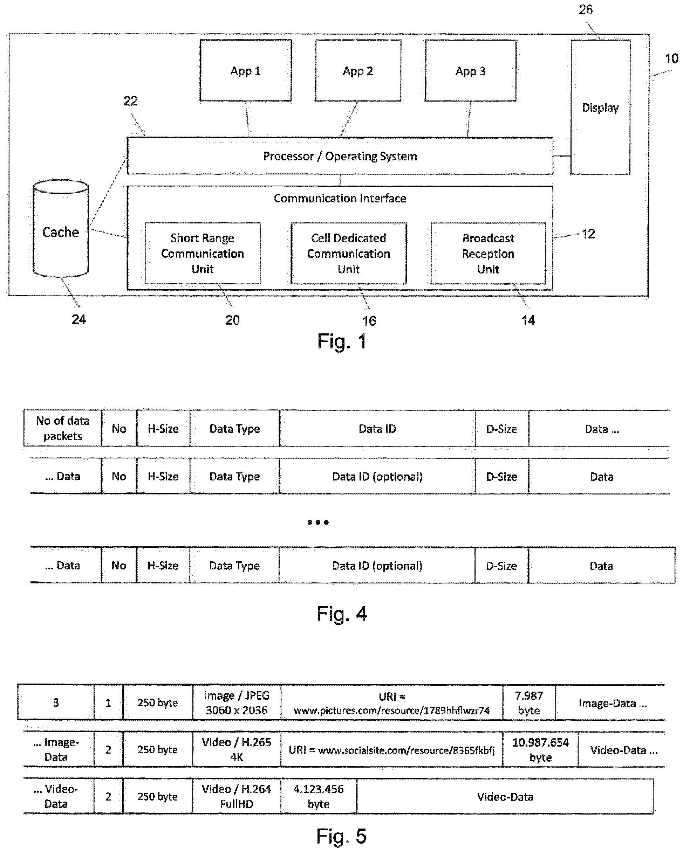

Fig. 1 shows a UE 10 comprising a communication interface 12. The communication interface 12 comprises a broadcast reception unit 14. This may be a part of a cellular mobile communication modem that is enabled to receive data via broadcast channels or via shared channels that are used to provide data to multiple UEs simultaneously. The broadcast may also be deployed as a multicast, e.g. a broadcast transmission whose reception is limited to a group of UEs. The broadcast reception unit may also comprise a receiver for TV or radio broadcasting systems, e.g. DVB-T or DVB-S, DAB and alike. According to this invention, the broadcast reception unit is used to provide data broadcast by the network that is meant to be cached by UEs.

The communication interface 12 further comprises a cellular dedicated communication unit 16 that comprises a cellular mobile communication modem 18 for exchanging data between the UE and one or more base stations which data is dedicated to the UE or coming from the UE. According to this invention, the cellular dedicated communication unit is used by the UE to transmit data to the network, e.g. UE capabilities, feedback related to the proposed caching functionality and charging information, and to receive dedicated information transmitted by the network to the UE, for example, configuration information.

The communication interface 12 may also comprise a short-range communication unit 20, for example a WiFi and/or a Bluetooth communication modem, which may alternatively be used for the purpose mentioned above for cellular dedicated communication and broadcast reception.

According to Fig. 1, the UE comprises a processor 22 executing an operating system (OS) that operates applications and communicates with the communication interface and a cache 24. The processor also abstracts hardware functionalities of the UE, e.g. of the communication interface and the display. It may also be responsible for managing and controlling the cache.

The cache 24 is a storage for storing data for future usage of the data by applications or the OS. The cache may be a separate memory on the mobile phone or it may be a memory on the UICC that is connected to the mobile phone, either embedded or as a chip card in a slot. Alternatively, and most likely, the cache may be a part of the UE non-volatile memory that is shared with other users of the memory, e.g. applications, the OS, media data of the user and other data. A maximum size of the cache may be defined, e.g. as a user preference or pre-defined or set by the operator. The cache may in addition to the maximum size occupy opportunistically a part or all of free memory.

The UE 10 comprises a display 26 for displaying a current user interface. The display is controlled by the OS.

As illustrated, the UE 10 also runs a number of applications. Fig. 1 shows three applications App 1, App 2 and App 3 that utilize the OS or in other words that are operated by the OS. Many more than three applications may run at a time and many more may be installed and ready for use but currently don't run.

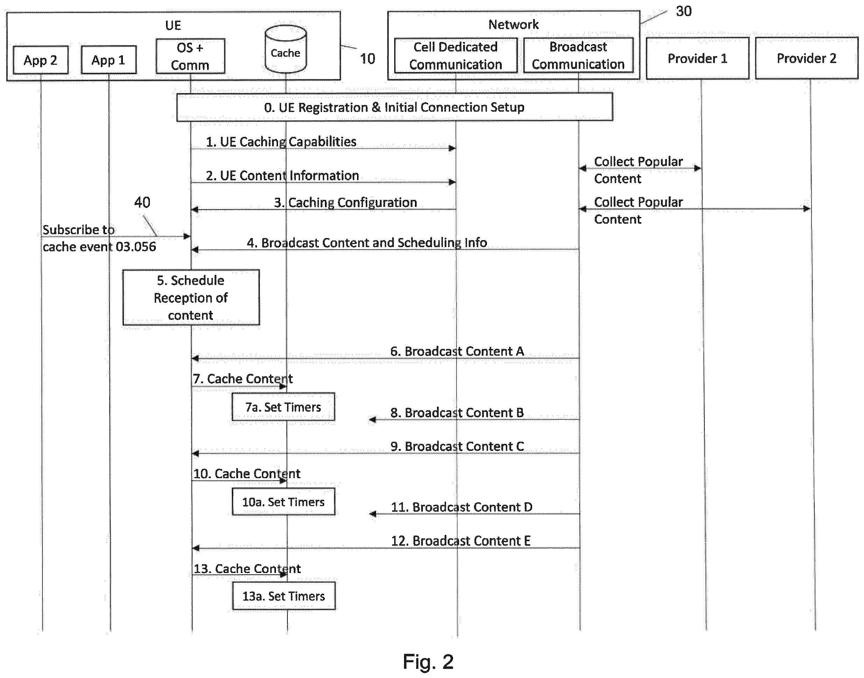

Fig. 2 shows a message sequence chart with an example of a message flow for data caching. For sake of readability Fig. 2 only shows the most important messages and leaves out messages that to not contribute to the understanding of this invention. Examples of intentionally left out messages are acknowledgements of receipt and confirmation of the message content.

Fig. 2 shows the UE 10 connected to a network 30, the network being connected to two content providers, Provider 1 and Provider 2. Fig. 2 shows only applications App 1 and App 2 running in the UE 10 but as shown in Fig. 1, more applications may be running.

The network 30 in Fig. 2 may for example be a cellular mobile communication network. It may also be a hybrid network consisting of a cellular mobile communication network providing some functions and a DVB-T broadcasting network providing further functions. The network may basically be any kind of network providing cellular dedicated communication interface to communicate directly with the UE and broadcast communication unit for broadcasting information to the UE.

The two content providers Provider 1 and Provider 2 shown in Fig. 2 may be any kind of data provider, e.g. media data provider, having data to transmit to the UE on request. As an example, Provider 1 could be a social media platform providing messages and videos. In that example, Provider 2 could be a server from a smart phone manufacturer in the internet providing the latest firmware update.

Fig. 2 assumes the UE is registered and connected to the network which is summarized in step 0 without details.

The UE provides in step 1 its caching capabilities to the network. There may be a request for caching capabilities by the network or the UE may trigger provision of caching capabilities on its own. The UE may transmit one or more of the following information to the network:
The fact that UE is enabled to cache data received from the network
Maximum cache size that is always available
User selected additional cache size reserved for cache (but reducible by user)
Current size of opportunistically used cache (reduced when needed elsewhere)

The network will receive the capability information and take it into account in its strategy to broadcast data.

In step 2 the UE provides information about content that is of general interest. The content information may be requested by the network or sent without request or sent as part of the capability information in step 1. Also, step 2 may be omitted and the network derives content of interest for the UE or the user from network internal analysis. The following are examples of what information may be provided by the UE to the network:
installed Applications, applications currently running in background, current foreground application(s)
content information derived from applications (installed, open, foreground) by the UE and provided in the form of indices to a pre-known catalogue or identifiers of content type and sources of interest, e.g. a MIME-type and web-addresses in the form of *video*/*urlexample.com* or *application*/*swupdates.urlexample.com.*

The network will receive the content information and take it into account in its strategy to broadcast data. Also, from capability and content information it will determine an appropriate configuration of the UE regarding the caching functionality. The configuration may include security data, e.g. decryption keys, for consuming the configured data while non-configured data cannot be decrypted and consumed by the UE. The configuration data may contain indices or content type information to be cached by the UE. A general minimum priority for content to be received and cached or a minimum priority per index or per group of indices may alternatively be contained. The configuration may contain time of day or day of week information that is applied so that all or a part of the configuration data only applies within or without the given time frame. The caching configuration is shown as step 3.

Independent of the UE and of the steps described above the network may collect popular data from content providers. It may either act as a client similar to what an application on a mobile device would do or interact with the content provider in a more sophisticated way. The content collection is shown in Fig. 2 as two-way arrows, the steps are not numbered to indicate they can appear at any time and they are repeated as appropriate according to the network's broadcast and caching strategy.

Independent of the actual broadcasting and communication with the network an application may subscribe to cache events on the phone to be informed about cached content. This can be useful for applications that differentiate cached from not cached content or that provide only cached content to the user. This is shown in Fig. 2, in which App 2 is a news applications showing popular images from news, represented by index 03.056, by an arrow 40 from App 2 to OS + Comm denoted "Subscribe to Cache Event 03.056". The step is not a numbered step as it may occur any time and may already have occurred at the beginning of the time frame represented by Fig. 2.

In step 4 the broadcast communication part of the network broadcasts content and scheduling information about forthcoming broadcast of data. This step 4. may be repeated in the course of this procedure to update the schedule and increase reception likelihood by UEs.

The content and scheduling information may contain the information shown in table 1.

**Table 1**

| No | Index | Media | Priority | Timer | Schedule |
|---|---|---|---|---|---|
| 1 | 01.076 | Image / 3060 x 2036 | 3 | 12h | A |
| 2 | 10.023 | Video / 4K | 2 | 12h | A |
| 2 | | Video / FullHD | | | A |
| 3 | 12.124 | Video / FullHD | 3 | 6h | B |
| 4 | 09.007 | Application | 1 | 7d | C |
| 5 | 09.013 | Application | 1 | 7d | D |
| 6 | 03.056 | Image / 3264 x 2448 | 1 | 24h | E |
| 7 | 03.056 | Image / 3264 x 2448 | 2 | 2h | E |
| 8 | 03.056 | Image / 3264 x 2448 | 2 | 1h | E |

The content information may contain a serial number or any kind of temporary identity that is assigned to indicate identical content that comes in multiple versions within the same schedule. As an example the content number 2 in table 1 is present in the broadcast two times, both are the same video with different resolution so that the UE can select the version it prefers and knows to ignore the other transmission.

The content information may include index information that points to a pre-known catalogue. In the arbitrary example for example 10 could point to a social network and 10.023 could identify a specific channel of that social network. 09 could indicate software updates in general and 09.007 could identify software update for a specific type of devices while 09.013 could identify software updates for another type of devices. 03 could be a category for any popular images and 03.056 may represent the most popular images from political news (not bound to a specific content provider).

The content information may include a priority as in the example in table 1 with priorities between 1 and 3. In case of memory shortage for the cache higher priority data replaces lower priority data. The timer information that may be contained in the content information indicates after what time the cached data reduces its priority by a pre-defined step. In the example, the video of a social network (No 2) reduces its priority, e.g. from 2 to 3, after twelve hours while the software updates stay in the cache with priority 1 for seven days. The images No 6, 7 and 8 have 24h, 2h and 1h timer, respectively.

The content information refers to scheduling information, in this example the content is divided into parts denoted A, B, C, D and E. The scheduling information itself is not shown and could build another table broadcast by the network as part of the content and scheduling information. In the scheduling information the exact timing and potentially the exact broadcasting resources for transmission of content A to E will be provided. The scheduling information is not depicted as it should be understood from the text herein.

The UE receives the scheduling and content information and derives its individual reception schedule based on the configuration of the network, the current cache size and other information about the content of interest.

In this example it is assumed that the UE is interested in or configured to receive content parts A, C and E. Within content part A it will decide on only one of the videos under No 2. For contents part A the UE could also decide to only receive No 1 or No 2 based on the index information provided and ignore the respective other data.

Now, content data is broadcast by the network according to the schedule send earlier. A general structure of the transmitted data could be as depicted in Fig. 4. Fig. 4 shows the complete transmitted data separated into field with a pre-defined meaning. The size of the fields in Fig 4 (as well as Fig. 5) is not proportional to the actual size of transmitted data, it rather shows an example of how the complete broadcast transmission could be structured.

The broadcast data may start with a field indicating the total number of media packets delivered in the broadcast followed by a structure repeated for every indicated piece of media data (media packet). The repeated structure (media packet) may include a header and a media data part. The repeated structure may indicate the serial number to identify media packets representing the same and different content. The next field may give the total size of the header of the media packet and thus point to the start of the media data. Next a field may indicate the media type including codec and/or resolution information. For the first occurrence of a representation of a media packet the unique ID used for identifying the cached information by an application or the OS is included. For subsequent representations of the same content the unique ID will not change and can be omitted. A last header field may indicate the total size of the media data and thus point to the next media packet (if contained). After this control information the actual media data follows.

In step 6 of Fig. 2 content part A is broadcast, the content could be as depicted in Fig. 5 which is an example of broadcast data utilizing the data structure of Fig. 4.

According to the schedule in table 1 the first broadcast contains 3 media packets, which is indicated in Fig. 5 as the first data field followed by the first media packet. The media packet is content number 1 and the total size of the header (control) information may be 250 byte. The next two fields about the data type and data ID of the media packet may be contained in the form of a full text description, e.g. a short Text-file containing an SDP (Service Description Protocol) description of the media data. Other descriptions are possible. In the concrete example the media is identified as an image with resolution and encoding (JPEG). The total size of the image data is 7987 bytes. The actual image data follows. Similarly, contents No 2 is included in the broadcast in two representations as 4K video encoded with the H.265 encoder and FullHD video with H.264 encoder. Both videos could also be identified as single representations of different content and uniquely identified with different unique IDs.

The example structure of Fig. 4 and example content of Fig. 5 are chosen to explain one embodiment of the invention without restricting any other choices. There are numerous ways to define a structure that is suitable to deploy the current invention and numerous examples for actual information could look different and yet implement the ideas of this invention.

The broadcast of step 6 is received by the UE and the data is stored in the cache in step 7. A timer is started or set so that the time-based reduction of priority of cached content can be initiated. This is shown as step 7a.

In step 8 data is broadcast that is not of interest to the UE, therefore the UE does not power its receiver, the broadcast is basically ignored by the UE indicated in Fig. 2 by an arrow ending without reaching the UE's OS and communication interface.

In step 9 content C is broadcast. The structure of Fig. 4 applies again and no further example of the actual media packet content is given herein. The data is cached by the UE in step 10 and timer are set in step 10a. Step 11 again shows a broadcast not of interest to the UE while step 12, 12a and 13 show broadcasting and caching of content E.

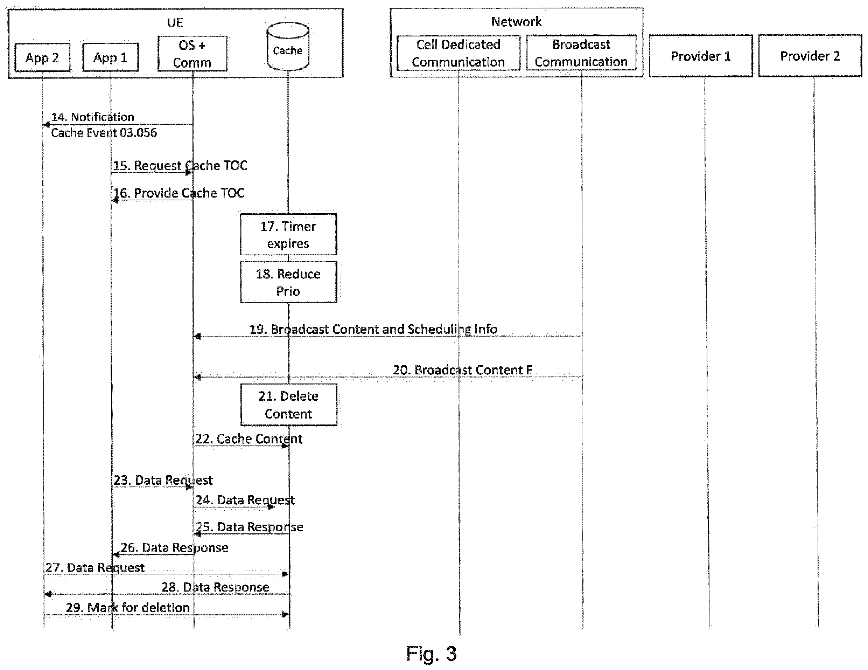

Fig. 3 is a continuation from Fig. 2 showing the same entities and the message flow following that shown in Fig. 2.

In step 14 application App 2 is notified about the newly cached content with index 03.056 that the application subscribed to and that was received in step 12.

Application App 1 may not subscribe to cache events but request a table of contents of the cache in step 15 that is provided by the OS in step 16. App 1 may not have the right to see all contents cached as the application may have restricted rights to personal information of the user, thus the table of contents may be adapted and reduced to the information the application is allowed to see.

In steps 7a, 10a and 13a timers are set which may be used for reducing the priority of cached content. In step 17 it is assumed that a timer, for example the one-hour timer of the third image of broadcast content E, expires. As a result, the priority of that image in its cache is reduced from 2 to 3.

In step 19. the network may broadcast a new schedule containing content F with schedule information as in table 2.

**Table 2**

| No | Index | Media | Priority | Timer | Schedule |
|---|---|---|---|---|---|
| 1 | 03.056 | Image / 3264 x 2448 | 2 | 1h | F |
| 2 | 03.056 | Image / 3264 x 2448 | 1 | 2h | F |
| 3 | 03.056 | Image / 3264 x 2448 | 1 | 1h | F |

The actual broadcast of the content takes place in step 20. Assuming now that the memory available for caching does not allow to store any more data without deleting old data. Based on the priority of data within index 03.056 the second and third image of content E will be deleted in step 21, as they both have priority 2 and two of the newly broadcast images have priority 1 within the same index, thus they replace the cached images in step 22.

Now looking at two ways for applications to request data and profit from cached data. The first way is described in Fig. 3 in steps 23 to 26. An application requests information from a peer communication server usually by compiling a HTTP request message requesting information or media data and transmitting the message to the peer via the dedicated communication interface. The message is first provided to the communication interface in the UE, either directly or as a procedure call of the OS. This is shown in step 23 that shows a general "data request" that may be a HTTP-request message transmission request or any similar request for data that is to be transmitted to the peer.

Now, the requested data identified within the data request by an identity, e.g. a URI, is looked-up in the content of the cache. If the data is present the data request is not sent to the peer, instead the request is served locally with data from the cache. The provisioning of a response to an application's request using locally cached data is shown in steps 24 to 26 in Fig. 2 describing example messages between App 1, OS+Comm and the *cache.* Other embodiments may deploy the inventive steps with different entities of the UE acting in a similar way. In this deployment, the application does not need to know it was served from a local cache.

Another possible way of getting data from the cache requires a cache aware application, assumed so for App 2. The application can directly request data from the cache shown example wise in step 27 as an arrow from App 2 to the cache. The data may also be requested from the OS or the communication interface together with a flag that indicates it is allowed or demanded that the data comes from the cache. The arrow directly from App 2 to the cache in step 27 should only indicate the application awareness. The data is responded to accordingly with the respective data in step 28.

Now, there may be data that is only or mainly consumed by a single application. A software update will only be used by the OS or an application within the OS to perform an update. According to this invention, it is foreseen that the application indicates to the cache (or again the OS or communication interface) to mark the cached data for deletion (as in step 29) or in other words, to mark it as used and not of any use in future. Then the data can stay in the cache until the memory is needed and it may then be deleted before any data is erased that is still valid. The principle may also apply to data that is consumed by multiple applications, but usually only once. A video may be played by a browser because it was referenced by a web-site or it may be played by the application of the UE. Both applications may request the video from the cache but if one application, say the browser, requested the video and presented it to the user, the likelihood that the user requests the same video again is rather small. Therefore, also in that case the application may mark the cached content for deletion in step 29 (probably after applying a grace period).

The present invention accordingly provides a UE that caches data selectively received from a network, the selection being based on a configuration received from the network.

In a further aspect, there is provided a system comprising means to provide UE capabilities with regard to reception of data to be cached and caching of data to the network, the local cache in the UE being split into a fixed or adaptable size memory of the UE and an opportunistically used memory of the UE, the opportunistically used memory having a size that dynamically increases if memory is not used otherwise in the UE and decreases if the memory is used otherwise. The system may comprise means to transmit information from the UE to the network about content applicable for caching. Further, the system may comprise means to transmit information from the UE to the network about actually consumed data from the cache, the consumption information comprises size and/or type information. The consumption information may be stored until a dedicated connection to the network is set up. The selectively receiving comprises selection of a part of the data broadcast by the network for potential caching while not receiving another part of the data broadcast by the network. The selection of a part of the data broadcast from the network for potential caching is based on configuration information received from the network. The selection is based on content information describing the data transmitted by the network for caching and on priority information transmitted from the network to the UE for caching. The priority information is used to prioritize caching of highly prioritize data over lower prioritized data. The priority of data is reduced based on a timer received from the network.

The invention further provides a network having cellular dedicated data delivery means to a UE and broadcast means for data deliver to the UE, the network providing configuration information to a UE with regard to reception of data to be cached from the network and caching of data, the network broadcasting data to be cached including data to be received and cached by the UE according to the configuration information. The network preferably provides scheduling, content, priority and/or timing information with reference to the data broadcast for caching. The network may receive information about actual content or data consumption within the UE. The network processes the information about actual content or data consumption in its charging processes. The network uses the information about actual content or data consumption to adapt the content that is broadcast.

The UE may be programmed such that an application in the UE that is aware of existence and potential content of a cache, the application through one or more application programming interfaces: subscribing to an event related to the content stored in the UE's cache, the event being that data of subscribed-to content is added to or deleted from the cache, requesting content from the cache, and requesting content of the cache to be marked for deletion, as a result the UE deleting the content in case the memory used for the content is required to cache newly received content or by other applications.

The UE may be programmed to provide a user interface that allows a user to select and set preferences (such as size of memory or fraction of the available memory, or opportunistically usage of memory) for local caching in the UE.

## Claims

1. A method for a user equipment, UE, device to cache data, the method comprising:
providing by the UE device to a mobile communications network to which the UE device is attached content information concerning content which the UE device has identified as being of potential relevance to a subsequent operation of the UE device, the content information comprising at least one of content type information, content source information and application information relating to an application on the UE device for processing the content; and
in response to a configuration message received from the network, the configuration message comprising information relating to data determined in the mobile communication network based on the content information received from the UE device, storing data received from the mobile communications network in a cache in accordance with the configuration message,
wherein the data is received from the mobile communication network in a broadcast delivery, the data reception comprising selecting from data contained in a broadcast transmission from the mobile communication network the data to cache based on the information comprised in the configuration message.

2. The method according to claim 1, wherein the UE device informs the network if the cached data is processed by an application on the UE device, the processing of data comprising at least one of reading the data during an operation of the application and rendering the data by the application.

3. The method according to claim 2, wherein the information comprised in the configuration message comprises data identification information for each of one or more parts of the data determined in the mobile communication network; and the informing the network if the data is processed by the application on the UE device comprises providing data identification information of the data processed by the application on the UE device to the network.

4. The method according to any of claims 1 to 3, wherein the UE device provides to the network information concerning an ability of the UE device to store data provided by the network.

5. The method according to any preceding claim, wherein the information concerning an ability of the UE device to store data provided by the network comprises cache size information about the size of memory available in the UE device for storage of data provided by the network.

6. The method according to claim 5, wherein the cache size information comprises information about a size of a fixed or user configured storage and an opportunistically available storage, the opportunistically available storage being available only if not required for operations of the UE device other than to cache data.

7. A method of operating a communications network comprising at least one base station in communication with at least one user equipment, UE, device, the method comprising:
receiving from the UE device content information concerning content which the UE device has identified as being of potential relevance to a subsequent operation of the UE device, the content information comprising at least one of content type information, content source information and application information relating to an application on the UE device for processing the content;
determining what data should preferably be cached by the UE device either based on the content information or based on information previously collected by the network based on previous data requests of the UE device;
providing the UE device with a configuration message comprising information relating to the data that should preferably be cached by the UE for enabling the UE device to store the data in a cache in accordance with the configuration message,
wherein the base station transmits caching data via one or more broadcast messages to multiple UE devices, the caching data comprising the data that should preferably be cached by the UE device, the caching data further comprising information that enables the UE device to select from the caching data the data that should preferably be cached by the UE device.

8. The method according to claim 7 further comprising:
receiving from the UE device information about cached data processed by an application of the UE device, the processing of data comprising at least one of reading the data during an operation of an application and rendering the data by an application; and
charging for use of the cached data.

9. The method according to claim 8, wherein the charging for use of the cached data comprises charging a subscriber of the UE device or charging a source of content contained in the used cached data.

10. The method according to claim 8, wherein the caching data comprises data identification information for multiple parts of the caching data and the information about cached data processed by an application of the UE device comprises identification information identifying the one or more parts of caching data that have been processed; and the charging comprises charging for use of the identified one or more parts of caching data.

11. The method according to any preceding claim wherein the configuration message comprises information enabling the UE device to receive particular data selected by the network for caching by the UE device.

12. The method according to any preceding claim, wherein the configuration message comprises scheduling information providing scheduling of data to be cached by the UE device.

13. The method according to any preceding claim, wherein the configuration message comprises indexing information to identify types of data the UE device may cache.

14. The method according to any preceding claim, wherein the data includes multiple unique identifiers, each unique identifier being a source of the data such that the UE device is able to retrieve the data from the cache if during operation of an application, a retrieval of the data from the source is triggered.

15. The method according to any preceding claim, wherein the configuration message includes at least one of index information to identify categories or types of data, media information concerning encoding and resolution of the data, priority information, timer information and version information.
